# EUROPEAN PATENT APPLICATION

(11) **EP 3 070 876 A1**
(43) Date of publication of application: **21.09.2016**
(21) Application number: 15382119.4
(22) Date of filing: 17.03.2015
(51) Int. Cl.: H04L 12/18, H04M 3/56, H04N 7/15

(54) **Method and system for improving teleconference services**

(71) Applicant: Telefonica Digital España, S.L.U., 28013 Madrid (ES)
(72) Inventor: Neystadt, John (Eugene), 28013 Madrid (ES); Small, Ian, 28013 Madrid (ES); Cardineau, Fabien, 28013 Madrid (ES); Fullea Carrera, Eduardo, 28013 Madrid (ES)
(74) Representative: Carpintero Lopez, Francisco

(57) **Abstract**

Taking into account that nowadays most teleconference participants have a personal communication device capable of taking part in the teleconference, it is possible to enhance the both video and audio conferencing experiences if the co-located participants use their personal communications device to participate in the teleconference. It is proposed a method, system and device which avoid the disadvantages of having co-located teleconference participants and allows at the same time an enhancement of the overall teleconference experience taking advantage of having different conference participants with different communications devices in the same location.

## Description

### TECHNICAL FIELD OF THE INVENTION

The present invention generally relates to teleconferences services over telecommunication networks and more particularly it is related to a method and a system for improving video or audio conference services, especially when some of the participants are co-located.

### BACKGROUND OF THE INVENTION

Generally speaking, a teleconference can be defined as a live communication between several users (participants) linked by a telecommunication system using a telecommunication network. The telecommunication system supports the teleconference by providing audio and/or video and/or data services, through a teleconference node. Therefore, the term teleconference is taken to include videoconferences (audio and video), audio conferences (only audio), web conferences and other forms of mixed media conferences.

Nowadays, it is common that many teleconference participants are physically located in the same room, but to have separate lines open to the teleconference server (for instance from different laptops). With the arrival of Smartphones and SmartTV's equipped with a camera and microphone, these devices can substitute dedicated corporate video and audio conference services equipments. In fact it is possible to provide this kind of services with such pieces of consumer electronics in a much cheaper fashion than with the expensive dedicated conferencing hardware. However given that most enterprise users are also equipped with communications devices such as laptop, tablet or SmartPhone, it is possible that each enterprise user have separate lines open in the teleconference using his own communications device. Such a situation implies drawbacks as well as advantages:
- The fact of having several participants in the same location using different communication devices, provide different audio and video sources. If this several sources are appropriately managed, the video and/or audio conferencing experience can be both enhanced, e.g. providing stitched video and surround audio.
- However, the main drawback is that the person speaking is picked by several different microphones and since each participant in the same room will also have a speaker playing the sound of the teleconference, the number of potential feedback loops will increase dramatically with each active microphone in the room, damaging the conference quality and making echo cancellation very difficult to achieve.

Moreover, the existing prior art solutions for the detection of co-located teleconference participants presents also other drawbacks. For example, patent US8243631 describes a method to identify other devices in a shared audio space (e.g., a room) by emitting a signal and receiving messages from other devices over a data connection indicating which of the other devices received the emitted signal. Devices that are determined to be in the same audio space can selectively mix audio in a teleconference to inhibit mixing of audio signals for devices that are determined to be in the same audio space. But the method proposed in the previous mentioned patent have some limitations as for example:
- It is based on emitting artificial signals (e.g. DTMF) to detect devices in the same room. This may be awkward for users. A different solution not needing these artificial signals like the one in this invention would be more advantageous.
- It is not dynamic. It has a set-up phase in which the location of the different devices are determined but it is not updated easily and dynamically in case of changes.
- It does not take into account other factors as if the devices has headphones or head speakers connected or if the devices are co-located with a common accessible device.

So it would be advantageous to have a teleconference system which overcomes at least some of the drawbacks of the prior art solutions, avoids the disadvantages (echo effect of multiple microphones) of having co-located teleconference participants and allows at the same time a enhancement of the overall teleconference experience taking advantage of having different conference participants with different communications devices in the same location.

### SUMMARY OF THE INVENTION

The problems found in prior art techniques are generally solved or circumvented, and technical advantages are generally achieved, by the disclosed embodiments which provide a method and system and device for managing teleconferences.

The participants in a teleconference (for example, a videoconference) which are co-located (e.g. located in the same room or generally speaking in the same premise) may use the same (shared) communication device to participate in the conference. For example, they may use a TV set provided with a camera and microphone and being capable of communicating (directly or via a communications module to which the TV set is connected) through a telecommunications network. Nowadays, advanced TV sets (such as Smart TVs) are equipped with camera, microphone and are capable of communicating through a telecommunications network (for example a IPTVs, Internet Protocol Televisions), so they are substituting corporate video and audio conference services. The telecommunications network can be a wired network, a wireless network, a mobile communications network (LTE, 3G, 4G, GSM...) or any other type of telecommunication network.

Given that nowadays most users (participants) have a personal communication device capable of taking part in the teleconference (with camera, microphone and capable of communicating through a telecommunications network), it is possible to enhance the both video and audio conferencing experiences if the co-located participants use their personal communications device to participate in the teleconference.

The teleconference enhancement may be done, among others, on the following aspects:
Audio: Awareness of multiple microphones present in the same room, detecting speaker location within the physical room and mixing their audio sources in a way that listener will hear sound coming from different locations, corresponding to speakers specific location, while preventing echo effect of multiple microphones. Awareness of a shared device in the same room co-located with other communications devices, sending the audio signal from other locations only to the shared device to avoid echo effect.
Video: Real-time stitching of multiple sources of videos coming from multiple cameras in the room, or automatic switching between video streams, based on speaker detection. Image stitching (also called image mosaicing) is a process of combining multiple images (photo images or video images), usually with overlapping fields of view, in order to produce an improved image (for example, a panoramic image or a high resolution image). Also it allows remote viewer to view the speaker from best angle, closing up from best camera available in the room, by selecting remote person manually or automatically based on speaker detection methods.

In a first aspect, it is proposed a method for providing an improved teleconference service to participants located in two or more different premises, the method comprising the following steps performed by a teleconference server:
a) From each participant communication device in the teleconference, receiving through a telecommunications network, device information in at least one signalling message. This signalling message may be, for example, the signalling message sent by each communication device to join the teleconference and it may also include an identification of the teleconference. The message can be a SIP message, such as a SIP INVITE message;
b) Determining, from said device information, whether each participant communication device whether each participant communication device is a shared device, that is, it is shared by the teleconference participants located in the same premise, to take part in the teleconference;
c) Determining which of the participant communications devices are located in a same premise;
d) For each premise:
   d1) Generating a single audio stream for said premise based at least on one of the audio streams received from the participant communications devices considered located in said premise according to the determination made in step c); this single audio stream may be used as teleconference audio output for all the participants located in said premise;
   d2) Sending (through the same or other telecommunications network) said generated single audio stream to the rest of premises (e.g. instead of independently sending to the rest of premises the audio of each participant communications device of the premise).

The device information may also include information about the location of the participant communications device sending the device information (in said case, the step c) is based in said received location information) and/or information on whether each participant communications device has headphones connected or not, is included in the device information received from each participant communication device. The device information may also include information on whether the communications device is used only by one participant to take part in the teleconference (it is a personal communications device).

The shared device may be for example, a smart TV, a smart phone or any other communications device which can be shared by several participants to take part in the teleconference.

Step d2) may comprise:
- For each premise of the rest of the premises, if it has been determined in step b) that there is a shared device in said premise, sending said generated audio stream only to said shared device and to the participant communications device which have headphones connected if any, and if there is no shared device in said premise, sending said generated audio stream to all the participant communication devices in said premise. That is, if there is two premises, A and B, the audio stream of premise A is sent only to the shared device of premise B and to the participant communications device of premise B which have headphones connected. If there is no shared device in premise B, the audio stream of premise A is sent to all the participant communications device of premise B.

The device information may include explicit information on whether the device sending the information is shared or not, by the teleconference participants located in the same premise to take part in the teleconference. The device information may include other information from where it can be determined whether it is a shared device or not. For example, it can include device type information and from the device type information, it is determined is the device is a shared device (for example an smart TV) or not.

In an embodiment, step d1) comprises:
- generating the single audio stream by mixing the audio streams received from more than one participant communications devices located in said premise where said mixing is made minimizing the echo effect and/or boosting an stereo effect and/or taking into account the specific location of the current participant speaking.

In an alternative embodiment d1) may comprise:
- if one of the participant communications devices located in said premise is a shared participant communication device, selecting the audio stream of the shared communication device as the single audio stream for said premise. Of course, if there is only one participant communications device in said premise, the audio stream of said only communications device will be used as the single audio stream for said premise.

The method may further comprise, for each premise:
d3) Generating a combined video stream (for example an stitched video stream) for said premise based on the video streams received from the participant communications devices located in said premise, according to the determination made in step c);

Said combined video stream may be sent only to the shared device (if any) of each premise of the rest of premises.

Said combined video stream together with the video stream received from each participant communications device located in the premise, may be sent to each participant communications device of the rest of premises and in each communications device of the rest of premises, is selected (e.g. by the user) between displaying the received combined video stream or displaying the video stream of a single participant communication device (e.g. the participant currently talking).

In an embodiment, the video stream sent from a premise to the rest of premises is the video stream of a shared device of the premise, if any.

In an embodiment, the method may further comprise for each premise:
d6) The teleconference server sending to each participant communications device of the rest of premises, the video stream received from the participant currently talking in the premise, if any, and if no participant in the premise is talking, the combined video stream.

The step of determining which of the participant communications devices are located in the same premise may be based, at least partially, on comparing (e.g. matching) the audio signals captured by the different participant communication devices.

In an embodiment, if the server receives a signalling message from one of the participant communication devices informing of a change in the location, the determining step c) is performed again taking into account said change in location and step c) is performed according to said new determination of co-located participants.

In an embodiment, if the server receives a signalling message from one of the participant communication devices informing of a change in the status of the connection of headphones to the device, the server sends or not the single audio stream to the device according to said change in the status.

In an embodiment, step c) includes: all the participants communications devices whose location is within a certain threshold distance are considered colocated in the same premise.

In a second aspect, it is proposed a system for providing an improved teleconference service to participants located in two or more different premises, the system comprising:
- Communications devices configured to send to a teleconference server, through a telecommunications network, at least one signalling message to join the teleconference, said at least one signalling message including device information;
- The teleconference server (for example an MCU) comprising:
   - A receiver configured to receive from the participant communications devices the at least one signalling message and audio and/or video streams through the telecommunications network;
   - A processor configured to:
      - Determine, from said device information, whether each participant communication device is shared to take part in the teleconference, by the teleconference participants located in the same premise;
      - Determine which of the participant communications devices are located in the same premise;
      - For each premise:
         - Generate a single audio stream for said premise based at least on one of the audio streams received from the participant communications devices located in said premise according to the determination previously made;
         - Send said generated single audio stream to the rest of premises.

In a third aspect, it is proposed a server for providing an improved teleconference service to participants located in two or more different premises, the server comprising:
- A receiver configured to:
   - Receive from each participant communication device in the teleconference, through a telecommunications network, at least one signalling message to join the teleconference, said at least one signalling message including device information;
   - Receive from the participant communications devices audio and/or video streams through the telecommunications network;
- A processor configured to:
   - Determine, from said device information, whether each participant communication device is shared, to take part in the teleconference, by the teleconference participants located in the same premise;
   - Determine which of the participant communications devices are co-located in the same premise;
   - For each premise:
      - Generate a single audio stream for said premise based at least on one of the audio streams received from the participant communications devices co-located in said premise according to the determination previously made;
      - Send said generated single audio stream to the rest of premises.

According to another aspect of the invention, a computer program product is provided, comprising computer-executable instructions for performing any of the method previously disclosed, when the program is run on a computer and a digital data storage medium is also provided encoding a machine-executable program of instructions to perform any of the methods disclosed.

Consequently, according to the invention, a method, system, computer program and storage medium according to the independent claims are provided. Favourable embodiments are defined in the dependent claims. These and other aspects of the invention will be apparent from and elucidated with reference to the embodiments described hereinafter.

### DESCRIPTION OF THE DRAWINGS

To complete the description that is being made and with the object of assisting in a better understanding of the characteristics of the invention, in accordance with a preferred example of practical embodiments thereof, accompanying said description as an integral part thereof, is a set of drawings wherein, by way of illustration and not restrictively, the following has been represented:
Figure 1: It shows a schematic block diagram of a possible videoconference system where the proposed method and system can be applied, according to one embodiment of the invention.
Figure 2: It shows a flow diagram of the different messages exchanged, for the teleconference system shown in figure 1, according to an embodiment of the invention.

### DETAILED DESCRIPTION OF THE INVENTION

The present invention may be embodied in other specific system and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope. In the following description, for purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present invention.

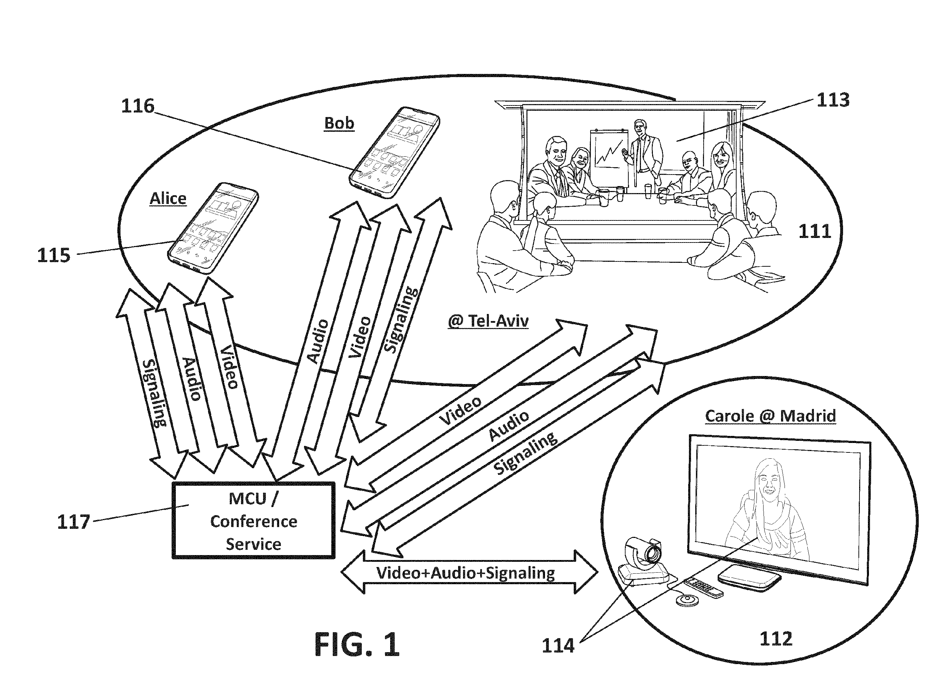

Figure 1 shows a block diagram of a teleconference system (in this case a videoconference system) where the present invention can be applied. Of course, the system shown in figure 1 is only an example to explain different aspects of the invention, but the present invention can be applied to any other type of teleconference systems with more locations, more or less participants, more or less shared and personal devices etc. In the described conferencing system, multiple participants reside in two or more physical locations Each location may be equipped with a central conferencing system (also called central communications device) consisting of, at least, speakers plus any or all of a display, camera and microphone; typically, these central shared conferencing system can be accessed by all (or at least most) of the participants located in the same location to take part in the teleconference. In addition, at least a participant in one of the locations is taking part in the teleconference system using also his own mobile communications device usually equipped with camera and microphone and connected to Wireless or Cellular network (for example a mobile phone). In the example shown in Figure 1, there will be at least a first and a second physical locations (premises) that will be rooms located in Tel-Aviv (111) and Madrid (112) respectively. The central conferencing systems will be a Smart TV (113) in the first location and a TV set with an external camera and microphone (114) in the second location. In the first location there will be two participants (Alice and Bob) with personal communications devices (115 and 116), different from the shared communications device, taking part in the videoconference. That is, in this case, Alice and Bob can take part in the teleconference (by audio and/or video) via the central conferencing system (113) but also via their own mobile phones (115 and 116). In the second location there will be one participant (Carole) with a communications device (114). In this case, as there is only one participant, the communications device (114) will be the shared central communication device of said location and will be at the same time a personal communication device (because it is used by a single user).

The teleconference service will be provided using, among others nodes, a multiparty control unit (MCU, also called multipoint control unit) which manages the teleconference. The MCU (117) is the device commonly used to bridge teleconferencing (in this case, videoconferencing connection), providing the capabilities needed for two or more terminals to participate in a multipoint conference (teleconference) or in other words the capabilities to conduct (video) calls involving more than two endpoints. Each communications device taking part in the teleconference (participant communications device or participant device) signs-in to conferencing system Multiparty Control Unit (MCU), for example, using predistributed conferencing id (such as URL). After sign-in, signalling session to the conferencing system (MCU) is established. Using this signalling session, the MCU may receive information from the participant communications devices, for example, it may receive participant communications device location information sent by each participant communications device. In addition, information on whether device is personal or shared (such as in case of SmartTV or a SmartPhone which is shared by several users) is included in the signalling. The device will be "personal" if it is only used by one user (participant) to take part (speaking and/or listening and/or capturing images and/or watching images captured by other participants) in the teleconference or it will be "shared" if it is used by more than one participant to take part in the teleconference. Usually, a shared device is considered accessible (to emit or receive audio and/or video signals) by all the participants co-located with the shared device so, in said case, the shared device will be the central communication device cited above. In figure 1, communications device 115 and 116 will be personal and communications device 113 will be a shared (or central) communications device. In addition, information on whether each personal communications device has headphones connected or not, may be included in the signalling.

This indication of whether the device is personal or shared can be an explicit indication or it can be an implicit indication. For example, the type of device can be indicated (e.g. smartTV / smartphone of brand 'X' and model 'Y') and the server can classify the device as personal or shared depending on the type of device, so for example, if the device is a mobile phone it is considered a personal device and if it is a TV (smart TV), it is considered a shared device.

Many type of signalling protocols may be used to perform the signalling session (protocol used in the signalling messages) between the participant communication devices and the MCU. In an embodiment, SIP protocol is used. Session Initiation Protocol (SIP) is a signalling protocol widely used for controlling communication sessions such as voice and video calls over Internet Protocol (IP). The protocol can be used for creating, modifying and terminating two-party (unicast) or multiparty (multicast) sessions. Sessions may consist of one or several media streams. SIP applications include video conferencing, streaming multimedia distribution, instant messaging, presence information, file transfer, online games and many others. SIP is an application layer protocol designed to be independent of the underlying transport layer; it can run on Transmission Control Protocol (TCP), User Datagram Protocol (UDP), or Stream Control Transmission Protocol (SCTP). It is a text-based protocol, incorporating many elements of the Hypertext Transfer Protocol (HTTP) and the Simple Mail Transfer Protocol (SMTP).

Of course, beside the signalling information, the communications devices (shared or personal) will send to the MCU the video stream and/or the audio stream captured by each communication device taking part in the teleconference. As it will be explained now, the enhanced MCU, proposed by the present invention, will process and distribute the video and/or audio stream received from each device to the other participant devices, taking into account several factors in order to enhance the teleconference experience.

The enhanced MCU, proposed by the present invention, uses the location information to figure out which participants are co-located in the same physical room. Knowledge of the co-location may be then used by MCU, for example, to produce a single mixed audio stream for each location (e.g. suppressing individual audio streams), with awareness of physical location of the speaker in the room.

In order to decide which participants are co-located in the same physical room based on the location information, any known method can be used. For example, from each participant location, the distance between the participants is calculated and it is considered that two participants are co-located (e.g. located in the same physical room) if the distance between them is less than a certain threshold. The value of the threshold is a design option and can be selected depending on different factors (rooms size, type of teleconference...).

Knowledge of the co-location may be also used by the enhanced MCU, to produce a single stitched video stream from all the cameras of participant communication devices in the same room (to have panoramic view of the room) or focus on an individual participant (on a video stream captured by an individual participant communication device). For example, the MCU may automatically switch between stitched stream and individual speakers, using who-is-talking information sent in the signalling, so that if no participant in a physical location is talking, stitched stream (or central video stream if shared device is equipped with camera) is displayed to all the participants but if a particular person is talking, his individual video stream is displayed. In an embodiment, the MCU sends several video streams (e.g., the stitched stream, the central communications device stream and the individual stream of the speaking participant) to all the communications devices and the user of the communication device can switch between said streams.

In addition, the MCU may receive also signalling information about whether headphones are connected to a certain communications (personal) communications device. Using said information and the information whether devices are shared or personal, MCU can decide to avoid sending audio stream to personal user devices with no headphones connected, if the conferencing location includes shared (central) device (such as SmartTV) to prevent echo effect. That is, if the audio signal is sent to personal communications devices without headphones, co-located with other communications devices, said audio signal can be captured by other colocated communications devices, producing an annoying echo effect which deteriorates the conference audio quality. In order to avoid this problem, the MCU may decide to send the audio signal, in each group of co-located participant communications device, to the shared communications device and, optionally, to personal communications device using headphones, avoiding sending the audio signals to personal communications devices not using headphones.

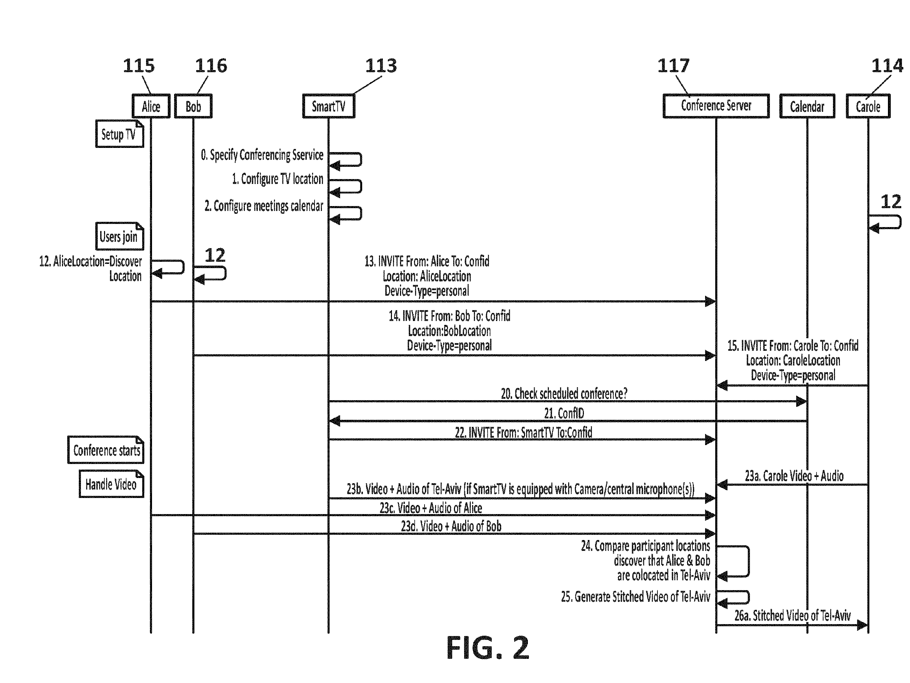

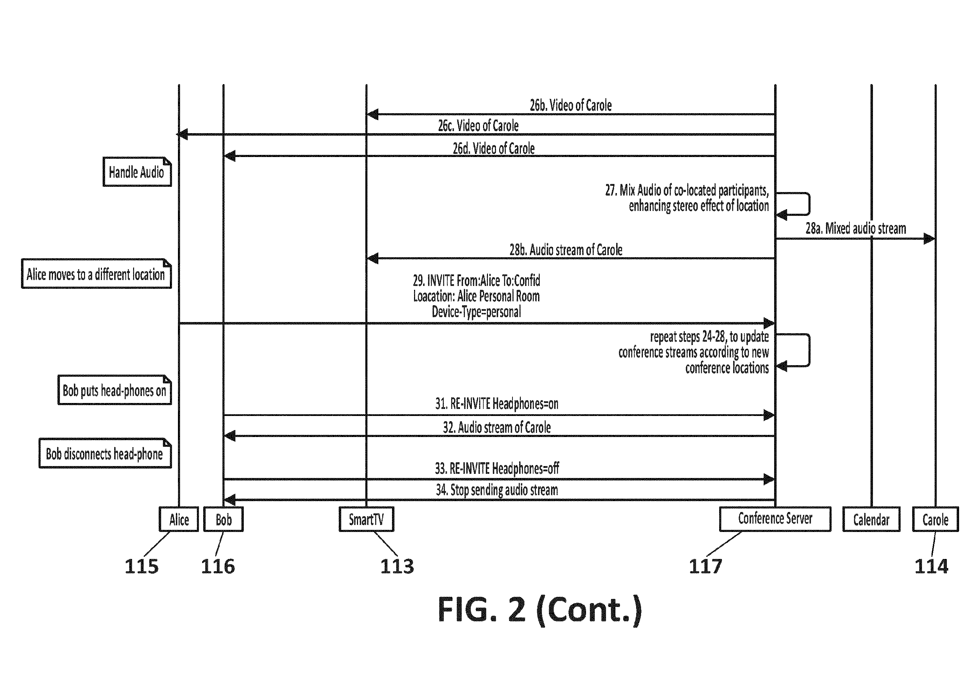

Now, the procedure followed (different steps taken) in the operation of the proposed teleconference system, according to an embodiment of the invention, will be explained. For a better understanding, reference will be made to figure 2, which shows a flow diagram of the different messages exchanged between the devices, for the exemplary teleconference system shown in figure 1, according to an embodiment of the invention. Figure 2 only shows an example and of course, not all the messages shown must be used in all the embodiments and the order of the messages may not be the same in all the embodiments.

The first step to set up the (tele)conference will be the configuration of the communications device taking part in the conference. The central conferencing device of the first location (in this case the Smart TV 112) is configured (0) with an address of the Conference Service Provider (or more specifically, of the conference server or node or generally speaking the entity in charge of managing the conference; this entity may be, for example, an MCU). The Smart TV is configured (1) with its location. The location may be specified manually by a user of the Smart TV or set to dynamic, in which case the central communications device (SmartTV) can discover its location using for example (this is only an example, any other location techniques known from the prior art could be used):
1. Using GPS hardware if available on the device
2. Using a network location service. For example the device can query a network location service, send to it information about available networks that the device can detect (such as list of WiFi network Basic Service Set Identifiers (BSSIDs) or Cell Tower ids) and the network location service will send back to the device information about its location.
3. Using IP2Location service. The IP2Location Geolocation Web Service is a hosted, programmable XML Web Service that allows instant identification of online devices by using their IP address. The IP2Location Geolocation Web Service returns geographical information such as country, region, city, latitude, longitude, ISP and domain name from the IP public address. The device can use its IP (if connected to public network) or use a protocol, such as STUN to discover its public IP address, in case it is connected behind NAT box.
4. Using an In-door-positioning system if available on the device.

Optionally a calendar url can be configured (2), where a conference list is stored. SmartTV can use conference-ids specified in the meetings included in the calendar to automatically connect to the conferences.

The rest of the participant communications devices (in this case the communications devices of Alice, Bob and Carole) must also discover their locations (12) using a location procedure (for example, any of the location methods explained above). In order to join the conference, each communication device will send a message (13-15) to the conference server (e.g. the MCU) including the identification of the conference they want to join (Conference-Id) and, optionally, device information. The address of the conference server can be obtained by the participant communications devices using any known methods. For example, said address may be pre-stored in the communications device, the device may be preconfigured with said address, the address may be included in a message (e.g. URL) received from a server (e.g. together with the conference_id), the address may be specified manually by the user...

Said device information may include the location of each communication device, information on whether device is personal or shared and other type of information related to the communications device. This message may be an INVITE request of a signalling protocol such as SIP. The device information can be included in the same message with the Conference_id or may be included in a different message sent from the communications device to the MCU.

In order to discover the conference_id several methods can be used. For example, the conference_id may be specified manually by the user communications device (through an user interface, for example, a keyboard where the user dials the conference_id). In an alternative embodiment, the communications device may receive a message from a server (for example, from a calendar application) to join a particular conference including the conference_id. In an alternative embodiment, the conference service provider may offer a Discovery Capability to provide to the participants with the conference_id. For example, conference service provider may maintain a list of all ongoing conferences and the id of the communications device participating in each conference and the conference service provider may sent to each participant communications device the conference_id or, in another embodiment, said conference_id is sent back to the communications device, when the conference service provider receives a conference_id request from a communications device, including the communications device identification.

In another embodiment, conference service provider may maintain a list of all ongoing conferences associated with their locations and once it receives the communications device location, it sends back, via an availability service, to the communications device a message with the conference_id of the active conferences in within a certain (configurable) distance of the participant device location. If there is only one conference, the communications device take automatically the conference_id of said conference (and include it in the INVITE message) and if there is more than one conference in said list, then the user can select in which of these conferences he wants to participate (with the optional approval of the conference administrator). In the case shown in figure 2, all participants join the conferences at the beginning. But, usually some participants may join when the conference has already started.

The joining of a shared device (such as SmartTV) to the conference and discovering Conference-Id, can be triggered for example by one of the following methods:
- Manual user request to join a conference with specified Conference-Id
- Checking (20, 21) in the calendar that an ongoing conference is scheduled, and what is its Conference-Id. This can be done when the device is turned on, when the user requests to check the calendar or performing a periodic interval check (e.g. every 10 minutes) of the calendar. This method can be also used by a personal communications device (if appropriately configured) to discover the Conference-ID and to trigger the "sign-in" of the communications device in the conference.
- Receiving an event from calendar to join a particular conference, by receiving an event from Availability Service, using for example, the method described in European Patent Application EP15382095 (belonging to the same applicant as the present patent application). Any user with a personal device, which has pre-authorized SmartTV to perform Conferencing and located in proximity of a shared device (SmartTV) can request the shared device to connect to the same conference ID that the personal device is connected, without further authentication or need to provide the Conference ID url to the SmartTV.

After Conference-ID is discovered (21), as it happens with the rest of participant communications device, shared SmartTV can send an INVITE request (22) including the Conference-ID, to join the conference, using signalling protocol, such as SIP. As it has been explained for the rest of participant communication devices, said message of the shared device to join the conference, may include device information as the location of the shared communication device or information indicating that is a shared device.

After all the received INVITE requests have been processed (and optionally approved) by the conference service provider (by the conference server), the conference may start and each participant device (personal communications device and shared device) may send (23a,b,c,d) in any moment (or continuously) their video and audio streams (in case they are equipped respectively with video camera and microphone) to the Conference service server. If a communications device is not equipped with video camera or with microphone, the communications device will not send any video or audio stream to the server respectively (but it can receive the video stream and/or the audio stream of other participants from the conference service server).

When the conference server receive the messages from the participants (INVITE request) to join the conference, the server (e.g. the MCU) determines (24) which of the conference participants are located in the same physical premises, e.g. same room (that is, they are co-located), for example, comparing the locations of the participant communications device. The matching of physical premises can be done by grouping participants into clusters (groups) within configured distance threshold (e.g. 5m). That is, as the Conference service Provider has the locations of all the participants communications devices, it can calculate the distances between the devices and it is considered that participants are co-located (e.g. located in the same physical room) if the distance between them is less than a certain threshold distance. Then all the participants considered co-located, are grouped in different groups or clusters (which may be associated to the premise where said co-located participants are located). In the example of figures 1 and 2, there will be a first group including Alice's device (115), Bob's device (116) and the smart TV (113) associated to the location (premise) in Tel-Aviv and there will be a second group including Carole's device (114) associated to the location in Madrid.

The distance threshold can be selected and changed according to venue location (e.g. small meeting room vs auditorium) and it can be determined according, for example, to one of the following methods:
- Configured on the Conference service server.
- Specified by a device starting the conference.
- Configured in the calendar meeting request.
- Retrieved as a property from location resource (e.g. meeting room mailbox).
- Specified associated to the location in the calendar event.

Each time a new participant joins the conference (INVITE request is received) or changes its location (a RE-INVITE request will be received as explained later), this steps (24) of discovering which participants are co-Ilocated in the same physical premises (e.g. same room) is repeated (in order to save resources it can be repeated only for the participant which has joined the conference or which has changed the location, comparing his location with the location of the rest of participants communications devices).

It is possible for Conference Service Provider to provide manual mapping or other methods for mapping participants to physical locations. For example, another method for collocation can be done by matching audio, received from multiple participants. In fact the audio signals captured by the different devices in a same physical space will be very similar to each other with just some small differences in delay and attenuation related to the different distances from each of the devices to the different speakers. On the contrary, a first device will not capture (at least not directly) the audio signal of a person speaking in a different location or, in any case, it will capture the audio signal of a person speaking in a different location, after the audio signal from that speaker has reached the Conference Service Server, has been transmitted to the first location, has been reproduced and then captured by the microphone of the first device. In this latter case the delay will be, therefore, much higher than if the device is in the same location of the speaker and therefore it is easy to discriminate the two cases and determine whether the devices are in the same location or not. This alternative method for collocation can be used if the first previous explained method cannot be applied, that is, in case a device is not sending its location to the server, this method can be used to detect proximity and treat the user as collocated. This method can also be used in order to adjust the results of the previously mentioned method (for example, if location of two participants is below the distance threshold but audio streams do no match, said participants are not considered co-located or the participants can be offered an additional step to confirm/refute his co-location). This further check (or adjustment) may be performed periodically during the duration of the conference.

The Conference Service Server then may start to generate (25) a stitched video for each location using the video streams received for all collocated participants in each location (including the shared communications device if it has a camera to provide a video stream). In the case shown in figures 1-2 as the only location with several co-located participant communication devices is Tel-Aviv, the stitching video will be generated only for Tel-Aviv, using the individual video streams of Alice, Bob and the Smart TV. Image stitching can be done according to any of the well known methods (for example, using the method disclosed in "Real-time Stereo-Image Stitching using GPU-based Belief Propagation" by Adan et al. or using other known stitching methods).

Stitched video stream may be then continuously sent to all the rest (from other locations) of conference participant devices (26a), optionally with an indication that this is a shared stream (from more than one participant). In an embodiment, the stitched video stream is also sent to the participants whose video streams is included in the stitched video stream, just in case they want to show said stitched video stream to their users. The video streams of the communications devices which are alone in its location (in this case Carol) are sent also to the rest of participant communications devices (26b-d). Optionally the video stream of the individual co-located participant communications devices (in this case Alice and Bob) may be sent also to the participant communications devices and each participant device can automatically choose which video stream to show to its user (the stitched stream or a video stream of an individual participant, for example, the participant who is currently talking, according to "who is talking" indication or the video stream from where the participant currently talking is better viewed). In an embodiment, it is the MCU which may automatically switch between the stitched stream and individual speakers, using who-is-talking information sent in the signalling, so that if no participant in a physical location is talking, stitched stream (or central video stream if shared device is equipped with camera) is sent and displayed to all the participants but if a particular person is talking, his individual video stream (or the video stream where the participant currently talking is better viewed) is sent and displayed in the participant communications devices. In an embodiment, the MCU sends several video streams (e.g., the stitched stream and the individual stream of the speaking participant) to all the communications devices and the user of the communication device can switch between said streams. The "who is talking" indication can be included in the media stream (for example using Real Time Transport Protocol RTP).

The selection of the stream can be done either by user's choice (the user selects via the user interface in the communications device, which video stream he wants to watch), by the MCU choice (as explained before, not all the video streams are sent to the participants but only the video stream selected by the MCU which switches between the stitched video or the individual participants video according to different criteria) or by each communications device via automated methods, such as speaker detection electing to show stream of the active speaker. In an embodiment, a view of the speaker from best angle is achieved by closing up from best camera available in the room for said speaker (this can be selected by the user manually or automatically based on speaker detection methods). Speaker detection can be done via any of the existing methods in either video (e.g. moving lips) or audio.

From the audio point of view, the Conference Service Server receives audio streams from all participants co-located (in the same location) and mix it in order to avoid echo and/or to boost stereo effect and have multiple audio channels from the same room, using any known method. For example, this mixing can be made using any known method of generating a single audio signal with several audio channels coming from different microphones. Conference Server then starts to generate (27) a mixed audio for all collocated participants in each location.

When in a location, the participants personal communications devices are co-located with a shared device, the Conference Service Server can decide whether to receive audio streams from all the participants personal communications devices in the location (and as before, mix it in order to avoid echo and/or to boost stereo effect and have multiple audio channels from the same room). In an alternative embodiment, the server can decide to only use the audio stream coming from the shared device, suppressing the individual audio streams (coming from the communications devices co-located with the shared device). In this latter case, the Conference Server may send a message to the personal communications devices co-located with a shared device, asking them not to send their audio streams.

Audio mixing of the audio streams of the participants co-located in each location, may be done taking into account each speaker specific location, producing single or multi-channel audio. This can be done using any known method. For example, in an embodiment, the audio mixing is a weighted combination of the audio signals from each device, depending on its location; that is, the audio signal coming from each communications device is weighted according to its specific location (for example, for the left audio channel, the audio signals coming from the devices located at the left side of the premise are given a higher weight than the devices located at the right side of the premise).

The speaker specific location can be obtained using known methods: for example, as described in patent US8165317 where two microphones are used to determine the relative position of a source or in patent application EP2600637 where the positions of microphones is determined using spatial power density or triangulating speaker location from microphones on each of the participant devices or using any other method.

For each location, mixed audio stream(s) of all participants co-located in said location are continuously generated and sent (28b) to the communications devices situated in the rest of the locations. If in a certain location there is only one participant (as Carole in the example of figure 1) or in a certain location there is a shared device and the MCU decides to only send the audio stream of said shared device, said single audio stream will be continuously generated and sent (28a) to the participant communications devices situated in the rest of the locations

Sending audio stream of other locations to participants co-located with a shared device may be avoided to prevent echo effect, so the audio stream is only sent to the shared device. That's why in the example of figure 2, the audio stream of Carole is only sent to the smart TV (the shared communications device) and not to Alice and Bob personal communications device. However, in case that a participant co-located with a shared device, has head-phones connected, said participant can request to receive the audio stream of other locations (because as it will not produce any echo effect as the communications device has head-phones connected).

If, during the conference, a participant moves to a different location (for example, moving from conference room to personal office or back or any other kind of movement), the participant communications device sends a message specifying the participants new location (and optionally the type of device, personal or shared), to the conference service server using SIP or other signalling protocol (e.g. a RE-INVITE message in the case of SIP). For example, in figure 2, Alice moves to a different location and its personal communications device sends a RE-INVITE message (29) to the MCU. This (change of location) message can be triggered by the user, informing to the personal communications device through the user interface a change in the location or can be automatically triggered by the communications device if it periodically checks its location and detects a change in the location.

Each time the Conference Service Server receives a message indicating that a new participant has joined the conference (e.g. an INVITE message) or that a participant has changed of location (a RE-INVITE message), it triggers a sequence of steps 24-28 in the Conference Server, that is, the Conference Server will perform again the steps of re-discovering participants colocation (to group the co-located participants), adjusting audio and video mixing and stitching according to the new colocation and redistributing (e.g. stopping or starting) video and audio streams to new (if any) and existing participants. For example, following to the previous cited example, if Alice changes location and it is determined that she is not any more co-located with Bob and the Smart TV (113), so the video stitching and audio mixing of location 111 will not include Alice video and audio stream and Carole audio stream as well as the audio and video signals of the location shared by Bob and the Smart TV will be specifically sent to Alice, as she is not any more co-located with the latter devices.

As explained before, in case that a participant co-located with a shared device, has head-phones connected, said participant can directly receive the audio stream of other locations. When said user disconnects the headphones the MCU has to adapt the teleconference to the new situation, so the conference quality is not deteriorated. In order to do so, when an user co-located with a shared device, connects or disconnects headphones to his personal communications device, a message is sent to the Conference Service Server (e.g. MCU) using SIP or other signalling protocol (for example, a RE-INVITE message in the case of SIP) indicating headset connection status. Then the Conference Service Server will start sending to said personal communication device the (mixed) audio stream of other locations (if headphones has been connected) or stop sending audio stream of other locations (if headphones has been disconnected). For example, in figure 2, when Bob connects headphones to its personal device, RE-INVITE request using SIP or other signalling protocol is sent (31), indicating headset connection status, so that Conferencing Service starts (32) sending Carole audio stream to Bob device; when Bob disconnects headphones in his personal device, RE-INVITE request is sent (33), indicating headset disconnection status, so that Conferencing Service stops (34) sending Carole audio stream to Bob device (it is only sent to the shared device). This (change of headphones status) message can be triggered by the user, informing to the personal communications device through the user interface that the headphones has been connected (or disconnected) or can be automatically triggered by the communications device when it detects a connection of disconnection of the headphones.

Summarizing, the present invention improves the user experience in a teleconference (for example, a videoconference) by grouping the participants communications device which are co-located in the same location, detecting if one of the participants co-located communications devices is a shared device (accessible for all the users in the same location), combines the video and/or audio signals of the co-located device and send said audio, video signals to each participant avoiding damaging effects (echo effect) and producing beneficial effects (improving the stereo effect).

In other words, the present invention enhances the user experience in a teleconference (for example, a videoconference) by receiving location information and other useful information from each communications device (for example type of device, personal or shared or headphones status) and appropriately managing the processing and distribution of audio and video signals from/to each participant according to said received information (grouping co-located devices, detecting shared devices in each location, avoiding echo effect in co-located devices, stitching video and/or mixing audio from co-located devices, managing change of location or status of the communication devices...).

In the present text the term "participant" will be used to refer to the user (person) taking part in the teleconference and the term "participant communications device or participant device" to the communications device used by an user to take part in the teleconference, in order to communicate with other users via the teleconference service (speaking and/or listening and/or capturing images and/or watching images captured by other participants). The communications devices may be mobile telephones, computer systems, laptops, tablets, Smart Phones, TV sets, Smart TVs or generally speaking any communication device with media resources (e.g. camera and/or audio) and capable of communicating through a telecommunications network. Specifically, the shared communications device can be a TV set, Smart TV, Smart Phone a PC or generally speaking, any communications devices which can be shared by more than one user to take part in the teleconference.

Even though in the presented embodiments there is only one shared device, this is only an example so the present invention can be applied in teleconferences where more than one shared device exist.

Even though many of the presented embodiments are referred to videoconferences, the present invention is not limited to this kind of teleconferences but it can be applied to any other type of teleconferences, for example to audio conferences.

The description and drawings merely illustrate the principles of the invention.

Although the present invention has been described with reference to specific embodiments, it should be understood by those skilled in the art that the foregoing and various other changes, omissions and additions in the form and detail thereof may be made therein without departing from the scope of the invention as defined by the following claims.

Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method for providing an improved teleconference service to participants located in two or more different premises, the method comprising the following steps performed by a teleconference server:
a) From each participant communication device in the teleconference, receiving through a telecommunications network, device information in at least one signalling message;
b) Determining, from said device information, whether each participant communication device is shared, to take part in the teleconference, by the teleconference participants located in the same premise;
c) Determining which of the participant communications devices are located in a same premise;
d) For each premise:
d1) Generating a single audio stream for said premise based at least on one of the audio streams received from the participant communications devices considered located in said premise according to the determination made in step c);
d2) Sending said generated single audio stream to the rest of premises.

2. A method according to claim 1 where the device information also includes information about the location of the participant communications device sending the device information and the step of determining which of the participant communications devices are located in the same premise, is based in said received location information.

3. A method according to any of the previous claims, where step d2) comprises:
- For each premise of the rest of the premises, if it has been determined in step b) that there is a shared device in said premise, sending said generated audio stream only to said shared device and to the participant communications device which have headphones connected if any, and if there is no shared device in said premise, sending said generated audio stream to all the participant communication devices in said premise.

4. A method according to claim 3, where information on whether each participant communications device has headphones connected or not, is included in the device information received from each participant communication device.

5. A method according to any of the previous claims where the device information includes information on whether the device sending the information is shared by the teleconference participants located in the same premise to take part in the teleconference and the determination in step b) is based in said information.

6. A method according to any of the previous claims 1-4, where the device information includes device type information and the determination in step b) is based in said device type information.

7. A method according to any of the previous claims, where step d1) comprises:
- generating the single audio stream by mixing the audio streams received from more than one participant communications devices located in said premise where said mixing is made minimizing the echo effect and/or boosting an stereo effect and/or taking into account the specific location of the current participant speaking.

8. A method according to any of the previous claims, where the method further comprises for each premise:
d3) Generating a combined video stream for said premise based on the video streams received from the participant communications devices located in said premise, according to the determination made in step c);

9. A method according to claim 8 where the method further comprises for each premise:
d4) Sending to each participant communications device of the rest of premises, said combined video stream and also the video stream received from each participant communications device located in the premise;
d5) In each communications device of the rest of premises, selecting between displaying the received combined video stream or displaying the video stream of a single participant communication device.

10. A method according to claim 8 where the method further comprises for each premise:
d6) The teleconference server sending to each participant communications device of the rest of premises, the video stream received from the participant currently talking in the premise, if any, and if no participant in the premise is talking, the combined video stream.

11. A method according to any of the previous claims where the step of determining which of the participant communications devices are located in the same premise is based, at least partially, on comparing the audio signals captured by the different participant communication devices.

12. A method according to any of the previous claims where, if the server receives a signalling message from one of the participant communication devices informing of a change in the location, the determining step c) is performed again taking into account said change in location and step c) is performed according to said new determination of co-located participants.

13. A system for providing an improved teleconference service to participants located in two or more different premises, the system comprising:
- Communications devices configured to send to a teleconference server, through a telecommunications network, at least one signalling message to join the teleconference, said at least one signalling message including device information;
- The teleconference server comprising:
- A receiver configured to receive from the participant communications devices the at least one signalling message and audio and/or video streams through the telecommunications network;
- A processor configured to:
- Determine, from said device information, whether each participant communication device is shared to take part in the teleconference, by the teleconference participants located in the same premise;
- Determine which of the participant communications devices are located in the same premise;
- For each premise:
- Generate a single audio stream for said premise based at least on one of the audio streams received from the participant communications devices located in said premise according to the determination previously made;
- Send said generated single audio stream to the rest of premises.

14. A server for providing an improved teleconference service to participants located in two or more different premises, the server comprising:
- A receiver configured to:
- Receive from each participant communication device in the teleconference, through a telecommunications network, at least one signalling message to join the teleconference, said at least one signalling message including device information;
- Receive from the participant communications devices audio and/or video streams through the telecommunications network;
- A processor configured to:
- Determine, from said device information, whether each participant communication device is shared, to take part in the teleconference, by the teleconference participants located in the same premise;
- Determine which of the participant communications devices are co-located in the same premise;
- For each premise:
- Generate a single audio stream for said premise based at least on one of the audio streams received from the participant communications devices co-located in said premise according to the determination previously made;
- Send said generated single audio stream to the rest of premises.

15. A digital data storage medium storing a computer program comprising computer-executable instructions for performing the method according to any of the claims 1-12, when the program is run on a computer.
